Europäisches Patentamt

European Patent Office

Office européen des brevets

(11) Publication number : **0 453 161 A2**

(12) # EUROPEAN PATENT APPLICATION

(21) Application number : **91303148.0**

(22) Date of filing : **10.04.91**

(51) Int. Cl.$^5$ : **G11B 7/00, G11B 7/125, G11B 27/36**

(30) Priority : **10.04.90 JP 94621/90**

(43) Date of publication of application :
**23.10.91 Bulletin 91/43**

(84) Designated Contracting States :
**DE FR GB NL**

(71) Applicant : **SEIKO EPSON CORPORATION**
**4-1, Nishishinjuku 2-chome**
**Shinjuku-ku Tokyo (JP)**

(72) Inventor : **Miyazawa, Takao**
**c/o Seiko Epson Corporation, 3-5 Owa**
**3-chome**
**Suwa-shi, Nagano-ken (JP)**

(74) Representative : **Caro, William Egerton et al**
**J. MILLER & CO. Lincoln House 296-302 High**
**Holborn**
**London WC1V 7JH (GB)**

(54) **Optical recording apparatus.**

(57)    The present invention provides optical recording apparatus having an optical head (101) with a semi-conductor laser as a light source. Data read means (102) generate data read signals obtained by monitoring recorded pits on an optical recording medium, and recording state detection means (103) detect the state of the recorded pits based on the data read signals and co-operate with optical output control means (104) so as to control the optical output of the light source at the time of information recording in dependence upon the state of the recorded pits.

EP 0 453 161 A2

FIG. 1

The present invention relates to optical recording apparatus, and particularly to means for controlling an output from a light source of the apparatus for information recording.

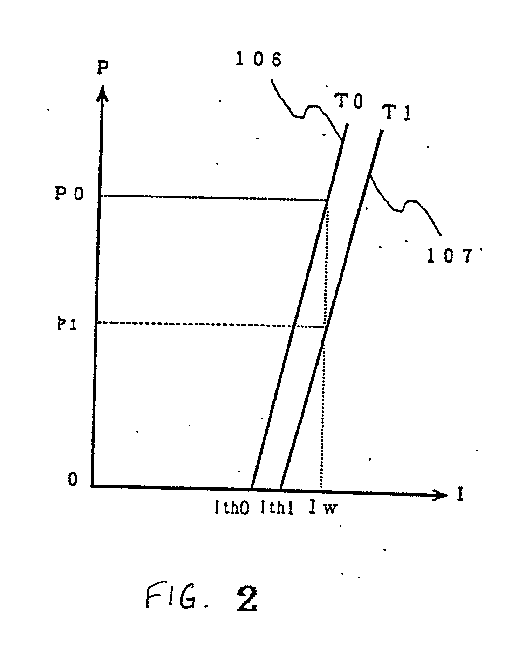

Figure 2 is a graph showing the relation between light output (P) and drive current (I) for a semi-conductor laser. The I-P characteristics of a semi-conductor laser have temperature dependence. That is, at a normal temperature T0, the oscillation threshold current (Ith) is Ith0 and the I-P characteristic is as shown at 106. When the temperature of the semi-conductor laser has risen to T1, the I-P characteristic is shifted as shown at 107. Thus, if the drive current Iw has a fixed value as shown in the Figure at a time of recording, the laser power will drop from P0 to P1 in response to a temperature fluctuation. When an attempt is made to record data in this state, either recording cannot be effected or the length of a recorded pit is shortened due to the temperature rise.

One prior approach to this problem is to carry out so called APC (automatic power control) to monitor the output of the semi-conductor laser with a photodiode and to control the laser so that the output is maintained fixed. Another proposed method is to control the recording power by pulse driving the semi-conductor laser and by monitoring the peak recording power during calibration using a disk region called the ALPC (automatic laser power control) region.

However, with such prior technology, although it is possible to control the recording power to a certain set value, it is not possible to detect whether or not this is the most suitable value at a point in time when recording is under way, so that it is not possible to effect a control that responds to fluctuations in the recording sensitivity of the disk resulting from temperature variation and/or sensitivity variation with the passage of time.

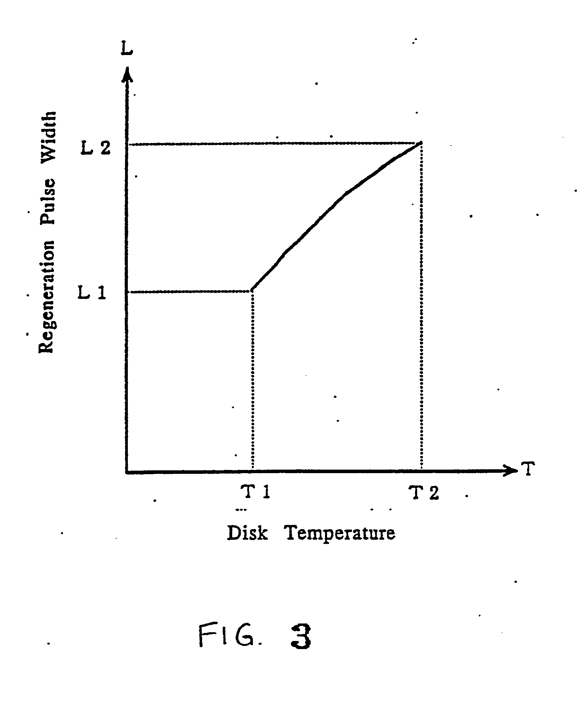

Figure 3 is a graph showing the relation between a recorded data pulse width and disk temperature when recording is done in a state where the recording power is maintained fixed. When the disk temperature rises from T1 to T2, the recording sensitivity rises and the recorded pits become larger so that the data pulse width increases from L1 to L2. This sort of prior technology has a problem in that the recording power ends up slipping away from the most suitable value and the signal quality of the data signal deteriorates.

The present invention seeks to resolve the problems described above and to provide optical recording apparatus capable of recording information without being affected by fluctuations in the recording sensitivity of a disk resulting from temperature changes and/or ageing.

According to the present invention, there is provided optical recording apparatus having an optical head with a laser as a light source, optical output control means for generating signals for controlling the optical output of the light source for information recording, and optical source drive means for driving the light source according to the output of the optical output control means, characterised by data read means for generating data read signals obtained by monitoring recorded pits in a recording medium, and recording state detection means, which detect the state of the recorded pits based on the data read signals and which co-operates with the optical output control means so as to control the optical output of the light source at the time of information recording in dependence upon the state of the recorded pits.

In the above apparatus, the state of the data read signals obtained from the recorded pits is monitored by the recording state detection means, and, when the recording power is judged to be excessive, the optical output control means reduces the output of the light source appropriately. Conversely, when the recording power is judged to be too little, the optical output control means increases the output of the light source appropriately. In this way, the output of the light source is controlled to optimise the state of the recorded pits so that information can be continuously recorded with an optimum recording power.

The present invention will be described further, by way of example, with reference to the accompanying drawings, in which:-

Figure 1 is a block diagram of optical recording apparatus according to the present invention;

Figure 2 is a graph of output P in relation to drive current I for a semi-conductor laser;

Figure 3 is a graph of data pulse width in relation to the temperature of a recording medium;

Figure 4 is a circuit diagram of a first embodiment of recording state detection means, in the form of pulse width measurement means, and optical output control means of the apparatus of Figure 1;

Figure 5 is a wave form diagram for signals at various parts of the circuitry of Figure 4;

Figure 6 is a circuit diagram of another example of the pulse width measurement means;

Figure 7 is a wave form diagram for signals at various parts of the circuitry of Figure 6;

Figure 8 is a circuit diagram of another embodiment of recording state detection means, in the form of duty detection means, of the apparatus of Figure 1;

Figure 9 is a wave form diagram for signals at various parts of the circuitry of Figure 8;

Figure 10 similarly is a wave form diagram for signals at various parts of the circuitry of Figure 8;

Figure 11 is a circuit diagram of a further embodiment of recording state detection means, in the form of amplitude measurement means, of the apparatus of Figure 1;

Figure 12 is a circuit diagram of another example of the amplitude measurement means;

Figure 13 is a circuit diagram of optical output control means and optical source drive means of the apparatus of Figure 1;

Figure 14 is a flow chart representing the operation of the optical output control means of Figure 13;

Figure 15 is a circuit diagram corresponding to Figure 13 but showing a modified form of the optical output control means;

Figure 16 is a sector format diagram for an optical recording disk;

Figure 17 is a circuit diagram of a further recording state detection means and recording pulse generation means of the apparatus of Figure 1;

Figure 18 is a wave form diagram for signals at various parts of the circuitry of Figure 17; and

Figure 19 is a format diagram of a user data region of an optical recording disk.

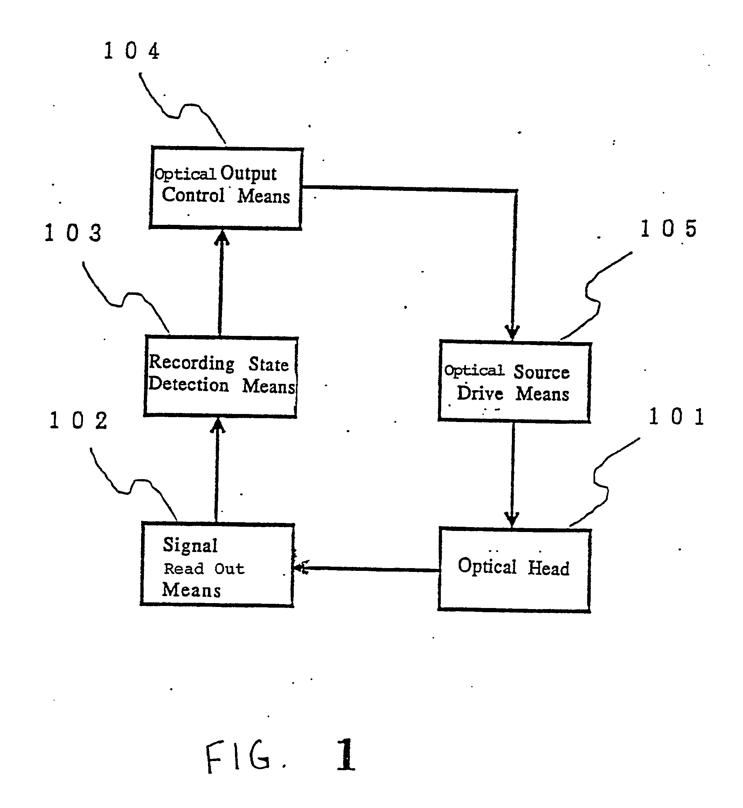

Figure 1 is a block diagram of optical recording apparatus according to the present invention comprising a semi conductor laser as a light source within an optical head 101. The laser records information in the form of pits in an optical disk, and the type of optical disk recording employed may be a write-once type or a magneto-optical or phase change erasable type. First, a drive or write current supplied by optical source drive means 105 is set by optical output control means 104 so that a previously determined recording power is achieved. The optical source drive means 105 drive the semi-conductor laser in the optical head 101 to record data. After the data recording, data verification is carried out conventionally by checking to see if the data has been written correctly.

At the time of verification, the state of a signal read out by data read means 102 is detected by recording state detection means 103. When the data read signal is recognised as being at a value representing a recording power lower than the optimum value, the optical output control means 104 responds by commanding the optical source drive means 105 to increase the drive current for the semi-conductor laser and hence to increase the optical output. Conversely, when the data read signal is recognised as being at a value representing a recording power higher than the optimum value, an operation is carried out that is the reverse of the above. The recording power is thus constantly controlled by such a sequence so as to have an optimum value.

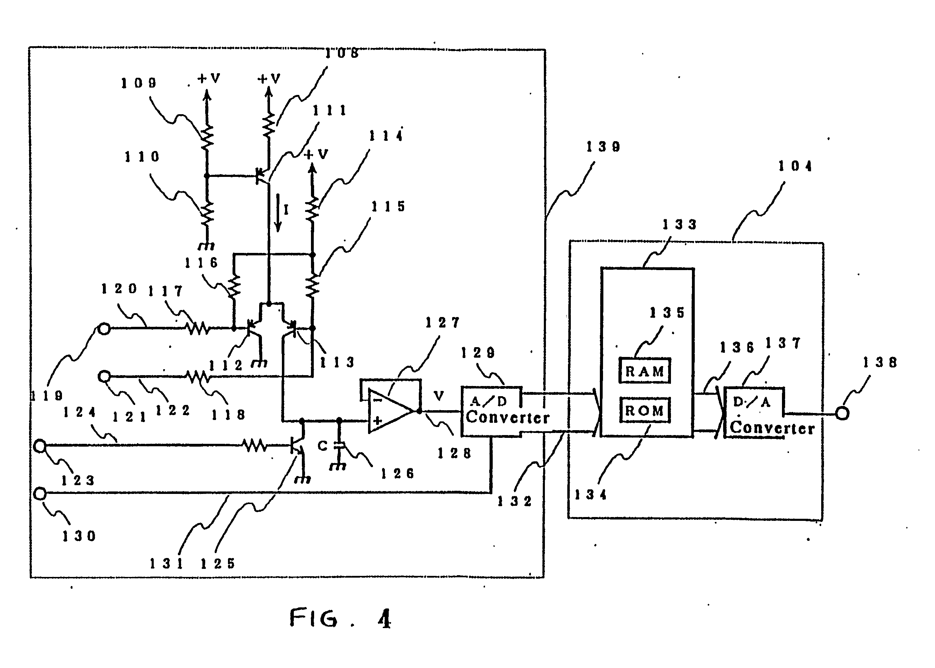

Figure 4 is a specific circuit diagram of a part of a first embodiment of the recording state detection means 103, comprising pulse width measurement means 139, together with the output control means 104. The recording state detection means 103 also comprises bistable means for converting the output from the data read means 102 into a digital signal, but explanation of these bistable means will be omitted because such means can be accomplished with conventional circuit elements, such as comparators.

The pulse width measurement means 139 will be explained first. A constant current source consists of resistors 108, 109 and 110 and a transistor 111. The value of the constant current is assumed to be I. This current may be switched by transistors 112 and 113. Resistors 114, 115, 116, 117 and 118 impart biases to the two transistors 112 and 113. A signal 120, which is a digitised string of data read pulses supplied by the data read means 102, is input at a terminal 119, and similarly a signal 122, which is a digitised string of data read pulses, is input at a terminal 121. The signal 120 will be "H" in a pit segment and "L" between pits, and the signal 122 is of opposite phase. Hence, the transistor 113 turns on, the transistor 112 turns off and the constant current I flows to a condenser 126 in the pit segments. Conversely, the constant current I flows from the collector of the transistor 112 to GND between the pits.

A transistor 125 is provided for the purpose of discharging the charge stored in the condenser 126 at a time when a re-set signal 124 input from a terminal 123 becomes "H" and makes the transistor 125 turn on. A buffer provided by an Op amp 127 is connected to the condenser 126 and provides a buffer output 128 whose value V increases, while the signal 120 is "H", as:

$$V = 1/C \int I\, dt$$

where C is the capacitance of the condenser 126.

Taking the duration of each data read pulse as T, representing the length of the pit segment, we obtain the value:

$$V = I\, T/C$$

That is, V is proportional to T.

The voltage V is converted to digital form by an A/D converter 129 to provide pulse width data 132, an A/D conversion timing signal 131 being input from a terminal 130. In this example, the A/D conversion is effected in response to the rising edge of the signal 131.

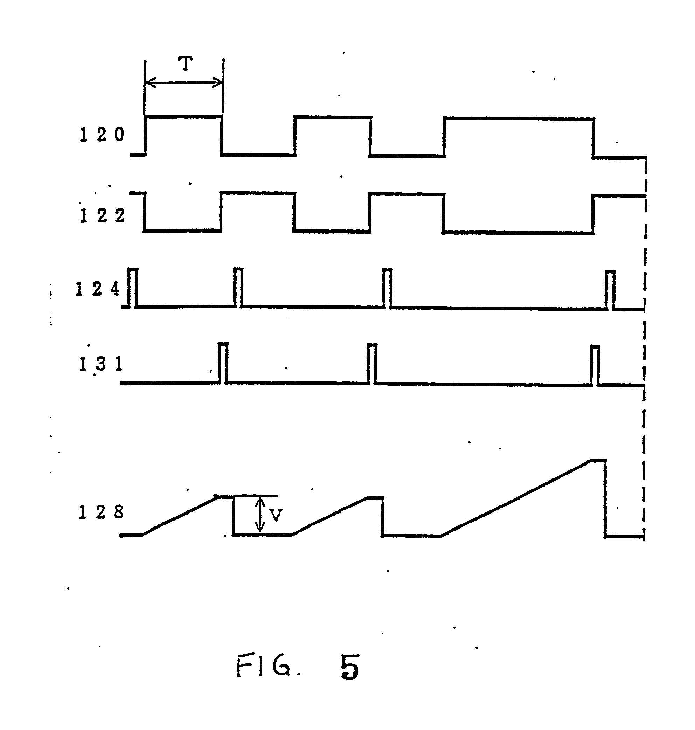

Figure 5 shows the signal wave forms at several parts of the pulse width measurement means 139 of Figure 4.

The circuit of the optical output control means 104 in Figure 4 will be explained next. The operational functions for recording power control are carried out by a CPU 133. Here, the CPU 133 is a one chip structure containing a ROM 134 and a RAM 135. The ROM 134 contains a control program and constants. The RAM 135 stores data, such as the results of operations, and is used when necessary. The CPU 133 compares the pulse width data 132 arriving from the pulse width measurement means 139 against a specified value. When the former is less than the specified value, the CPU 133 outputs data 136 to a D/A converter 137, which effects D/A conversion to supply a laser power control signal from a terminal 138 so that the pulse current at recording time is increased and the recording power becomes greater. When the pulse width data 132 is greater than the specified value, operations the reverse of those just described are carried out so that the recording power is made smaller.

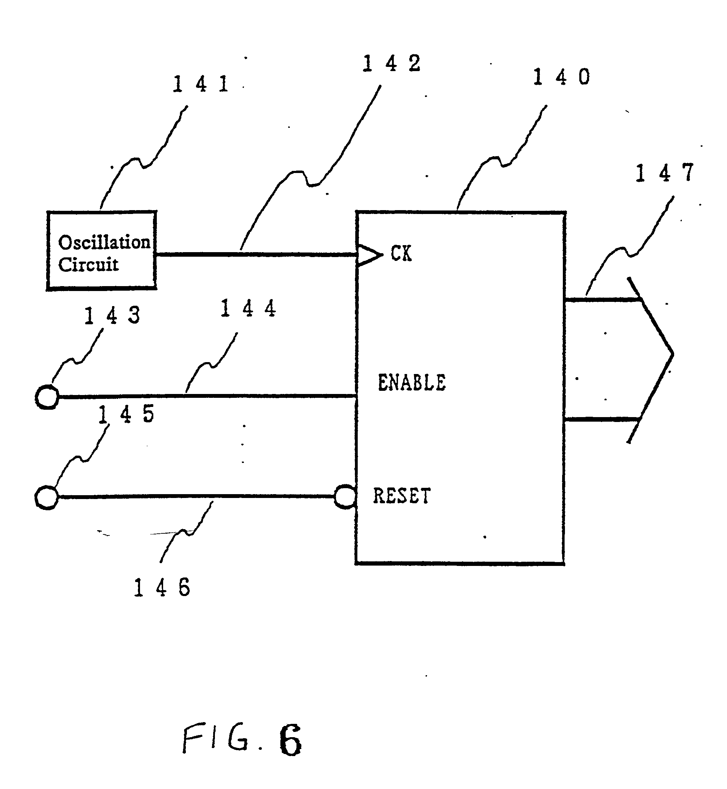

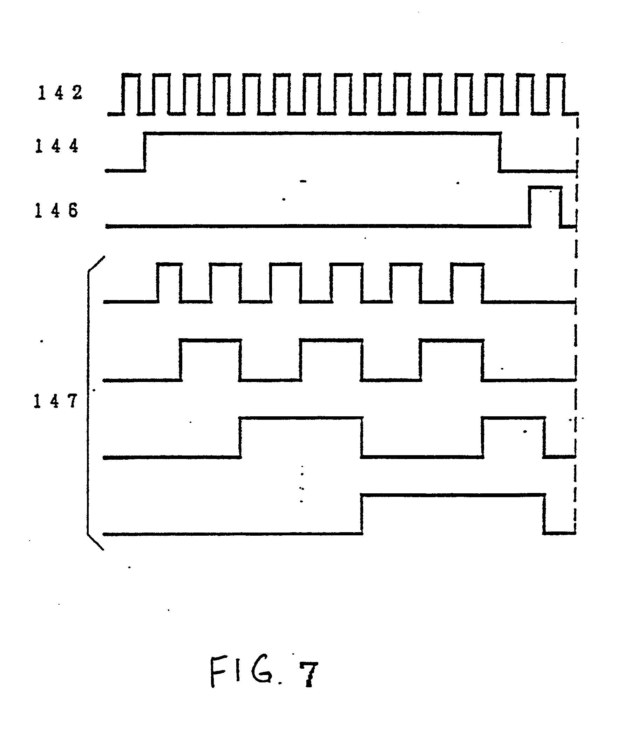

Figure 6 shows an alternative example of the pulse width measurement means 139 comprising a quartz crystal oscillator 141 for generating a clock signal 142 for a counter 140. A signal 144, which is a digitised string of data read pulses supplied by the data read means 102, is input from a terminal 143. This signal becomes "H" at a pit segment, and the counter 140 goes to an enable state at this time. Also, a re-set signal 146 for the counter 140 is input from a terminal 145, and when this signal becomes "L", the counter 140 is re-set. The output 147 of the counter 140 constitutes data from measurement of the pulse width. Figure 7 shows the signal wave forms at each part of the circuit of Figure 6.

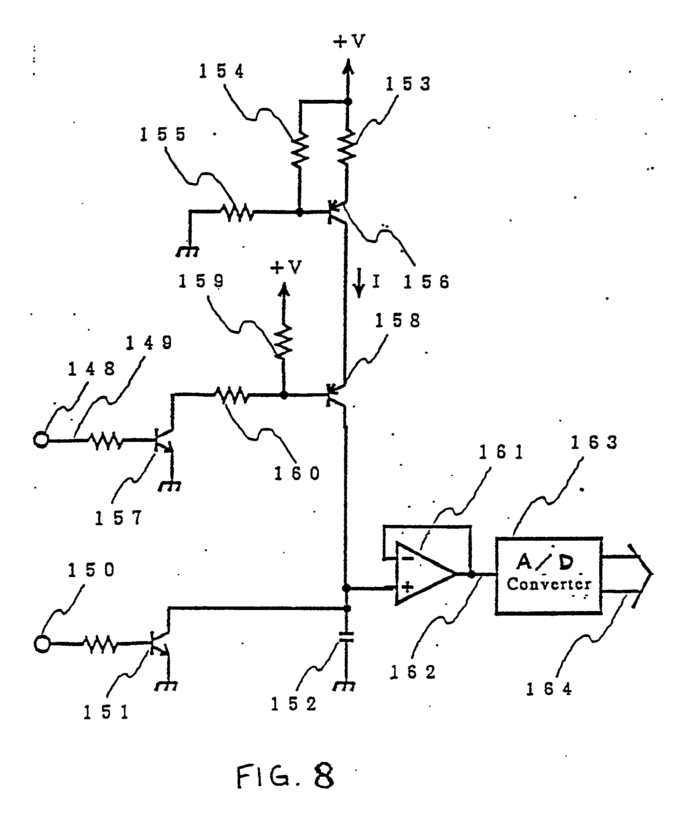

Figure 8 is a circuit diagram of a part of another embodiment of the recording state detection means 103 of the apparatus of Figure 1, in the form of duty detection means. A digital signal 149, provided by the bistable means of the recording state detection means 103 mentioned above, is input at a terminal 148 and a re-set signal is input at a terminal 150. When the re-set signal is "H", a transistor 151 turns on and the charge stored in a condenser 152 is discharged. The re-set signal becomes "H" only for a predetermined time before the state of the data read signal is detected. A constant current source comprises resistors 153, 154 and 155 and a transistor 156. The value of the constant current is assumed to be 1. When the digital signal 149 is "H", a transistor 157 turns on, and base voltage of a transistor 158 attains a value determined by a voltage +V divided by resistors 159 and 160. At this time, current passes through the transistor 158 and charges the condenser 152. An Op amp 161 comprises a buffer, whose output voltage 162 has the same magnitude as the voltage across the condenser 152. Taking the time for which the digital signal 149 is "H" as T, and taking the voltage of the output 162 as VO:

$$VO = I * T$$

On the other hand, when the digital signal 149 is "L", the transistor 157 turns off, the base of the transistor 158 is fixed at the voltage +V, and the transistor 158 is turned off so that the current I does not flow into the condenser 152. The voltage V0 retains the value that it had previously and the output 162 is converted to a digital signal 164 by an A/D converter 163.

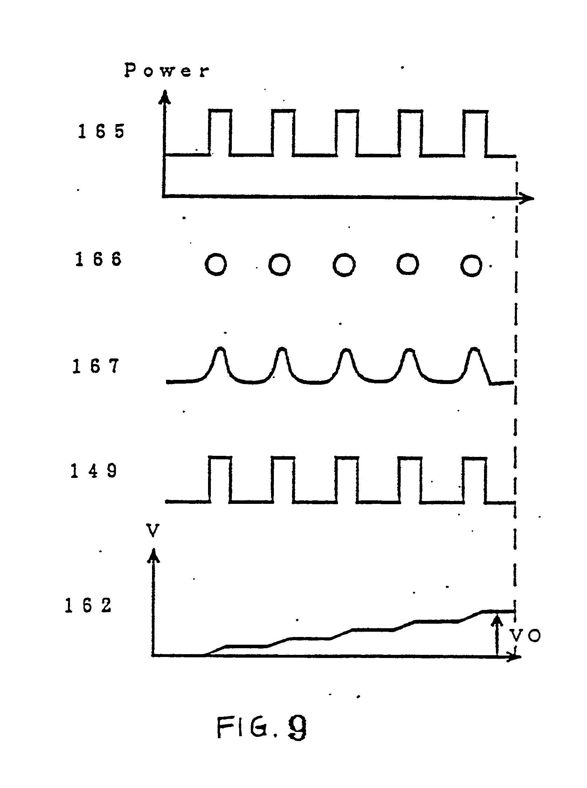

The optical output control means 104 is responsive to the digital signal 164, and acts so as to increase recording power when the duty ratio is low and conversely to decrease recording power when it is high. Figure 9 shows the signal wave forms for the circuit of Figure 8 when the recording power is lower than the optimum value. With the optical output of the laser in its shortest repetitive pattern 165, the recorded pit string is as shown at 166. The corresponding data read signal 167 then gives the digitised signal 149 as shown. It can be understood that the most suitable recording power will be obtained when the duty ratio of this signal is 1:1. In the case of Figure 9, however, the duty ratio of the signal 149 is less than 50%.

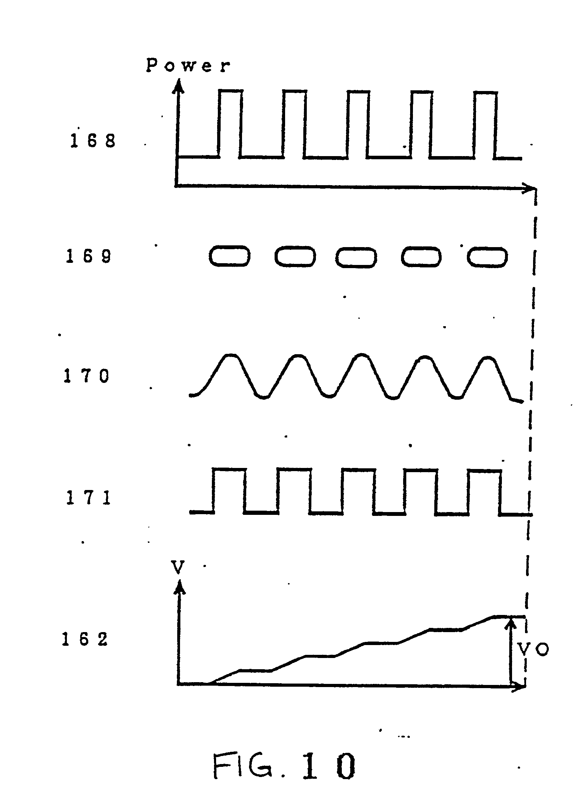

On the other hand, Figure 10 shows the signal wave forms for the circuit of Figure 8 when the recording power is at the most suitable level. When recording is done with an optical output 168, the recorded pits become as shown at 169. The wave form of the data read signal 170 then gives a digitised signal 171. The duty ratio of the signal 171 is 50%, and it will be understood that the recording power is now at the most suitable level.

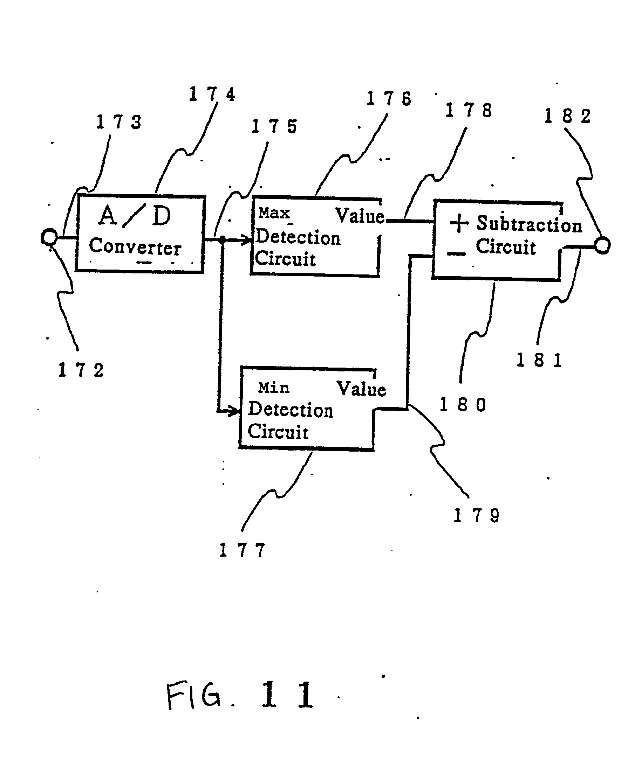

Figure 11 is a circuit diagram of an alternative form of the recording state detection means 103 comprising amplitude measurement means. A data read signal 173 input from a terminal 172 is supplied to an A/D converter 174 and converted to a digital signal 175. The maximum value of the digital signal 175 is detected by a maximum value detection circuit 176 for generating a corresponding output 178, and the minimum value of the digital signal is detected by a minimum value detection circuit 177 for generating a corresponding output 179. Next, amplitude data 181 is provided to a terminal 182 by subtracting the minimum value output 179 from the maximum value output 178 using a subtraction circuit 180.

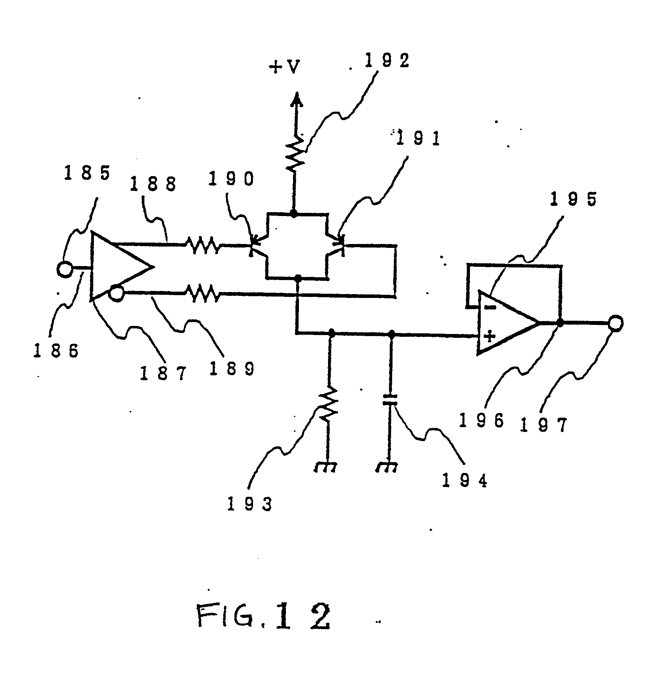

Figure 12 is a circuit diagram of another example of the amplitude measurement means. A data read signal 186 is input from a terminal 185 to an amplifier 187, which supplies an output signal 188 of the same phase as the signal 186 and an output signal 189 of the opposite phase from the signal 186. Further, the direct current biases of the outputs 188 and 189 are of the same potential. Full-wave rectification is carried out by transistors 190 and 191 and resistors 192 and 193. A condenser 194 is installed in order to smooth the signal after rectification. A buffer comprising an Op amp 195 then supplies an output signal 196 from a terminal 197, which represents the amplitude of the signal 186.

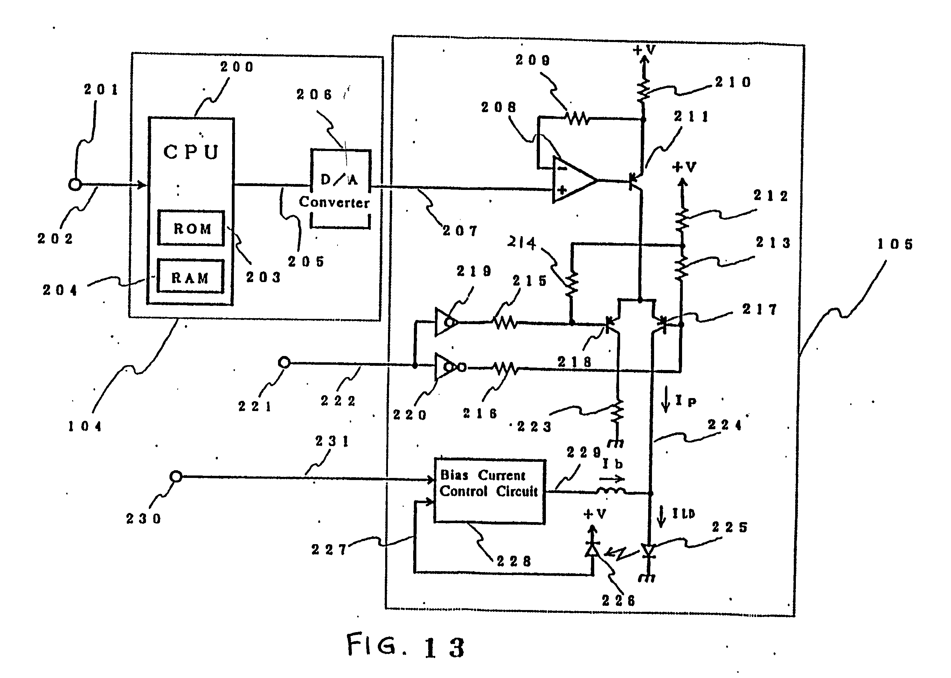

Figure 13 is a circuit diagram of an example of the optical output control means 104 and the optical source drive means 105. The optical output control means 104 will be explained first. Control of the optical output is carried out by a CPU 200. In the case of this example, the CPU 200 has a one chip structure containing a ROM 203 and a RAM 204. The control program and constants are stored in the ROM 203, and the various measurement values and set values are stored in the RAM 204 to be used as necessary. A signal 202 representing the recording state of the pits is supplied from the recording state detection means 103 to a terminal 201. The CPU 200 supplies digital data 205 corresponding to the recording state to a D/A converter 206 for controlling recording power to set the pulse drive current of the semi-conductor laser at recording time.

The optical source drive means 105, which generates a drive current for driving a semi-conductor laser 225, will now be explained. Current $I_{LD}$ flowing in the semi-conductor laser 225 comprises the sum of a bias current 229 (Ib) and a pulse current 228 (Ip).

The bias current control circuit will be described first. The optical output of the semi-conductor laser 225 is detected by a monitoring photo-diode 226. At the time of signal data read, a bias current control circuit 228 controls the current Ib so that the value of a monitor signal 227 is constant. During recording, the current Ib is held at its value immediately before recording by a control signal 231 input from a terminal 230.

The pulse current drive circuit will be explained next. A constant current source, which determines the pulse current Ip, comprises resistors 209 and 210, a transistor 211 and an Op amp 208. The current value is determined by an output signal 207 of the D/A converter 206 of the optical output control means 104. Transistors 217 and 218 switch the said current, and resistors 212, 213, 214, 215 and 216 impart biases to the transistors 217 and 218. Recording pulse data 222 is input from a terminal 221. An open collector type buffer 219 (a TTL 74LS07), and an open collector type inverter 220 (a TTL 74LS06) are also provided.

When the recording pulse data 222 is "L", the transistor 218 is on, the transistor 217 is off and the pulse current Ip flows to a resistor 223 without flowing to the semi-conductor laser 225. When the recording pulse data 222 is "H", the transistor 218 is off, the transistor 217 is on, and the pulse current Ip flows to the semi-conductor laser 225 and the drive current $I_{LD}$ of the semi-conductor laser 225 becomes

$$I_{LD} = Ib + Ip$$

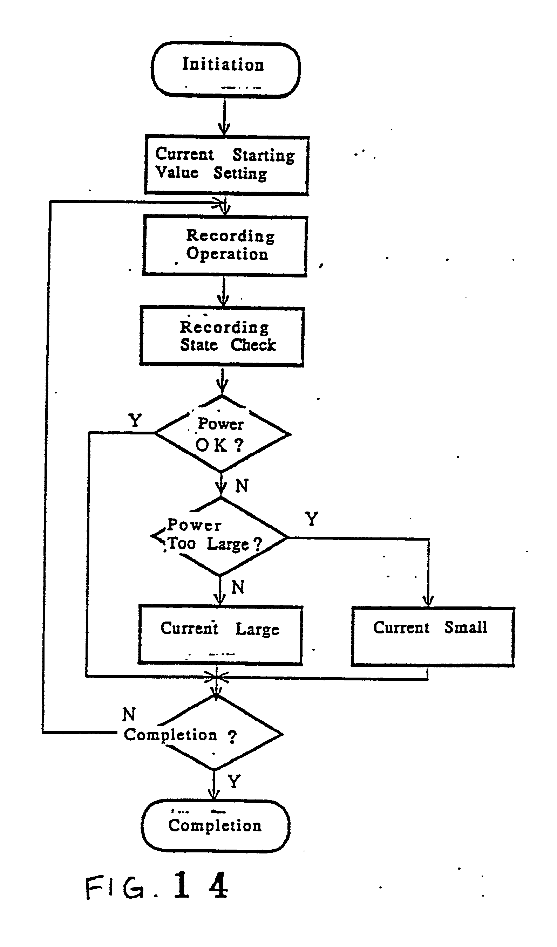

Figure 14 is a flow chart showing the operation of the optical output control means 104 in Figure 13. The control process based on this Figure comprises the following steps:

1. Initiation.
2. The pulse current Ip is set to a starting value written in the ROM 203.
3. The recording operation starts.
4. The recording state of the pits is checked by the recording state detection means 103.
5. It is decided whether the recording power is satisfactory, and, if it is, the value of the pulse current Ip is not changed. If it is not satisfactory, it is decided whether the recording power is too large or too small.
6. When the recording power is too large, the pulse current Ip is decreased. When it is too small, the pulse current Ip is increased. The proportion by which the current is increased and decreased is determined according to the amount of deviation from the optimum value of the recording power.

7. It is decided whether the process is completed or not.
8. If it is not completed, the recording operation is done a second time. If it is completed, the control process is terminated.

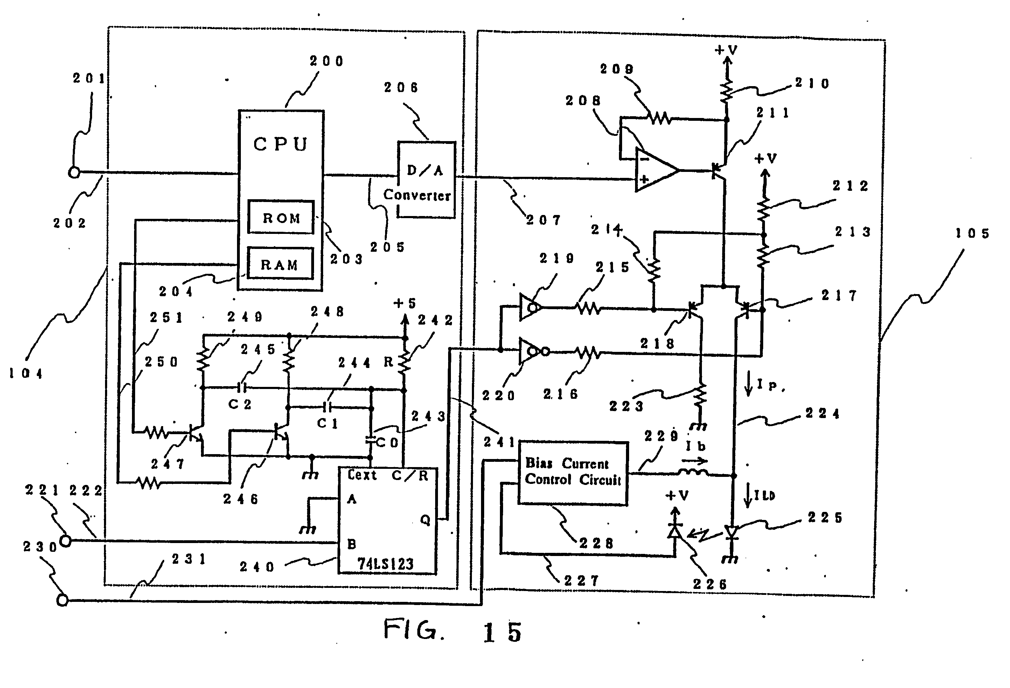

Figure 15 is a circuit diagram corresponding to Figure 13 but showing a modified form of the optical output control means 104. In this example, the circuit includes means for controlling the recording power and recording pulse width at the time of information recording. In the Figure, the same numbers are shown for the same elements as those appearing in Figure 13. The current drive circuit for the semi-conductor laser of the optical source control means 105 is identical to that shown in Figure 13 and, since it has been explained above, a further description will be omitted here. The optical output control means 104 only will be explained.

In this case, the CPU 200 is a one chip structure containing the ROM 203 and the RAM 204. The control program and constants are stored in the ROM 203, and each measurement value and data for recording power and recording pulse width settings are stored in the RAM 204 for use as necessary. The CPU 200 transmits digital data 205 for controlling the recording power to the D/A converter 206, and sets the pulse current Ip, which drives the semi-conductor laser at the time of recording as above.

Control of the pulse width will be explained next. A mono-stable multi-vibrator 240 using a TTL 74LS123, generates a recording pulse 241 of fixed duration T in response to the leading edge of pulses of the recording pulse data 222 input from the terminal 221. Here, the resistance value of a resistor 242 is taken as R, the capacitance of a condenser 243 is taken as C0, the capacitance of a condenser 241 is taken as C1, and the capacitance of a condenser 245 is taken as C2. The recording pulse duration T is determined according to the following formula, based on the resistance R and the capacitance Ct between terminals Cext and C/R of the mono-stable multi-vibrator 240:

$$T = a \times R \times Ct$$

where $\underline{a}$ is a constant.

By changing the value of Ct, it is possible to control the recording pulse duration T. Transistors 246 and 247 serve as switches for controlling combinations of the capacitances C0, C1 and C2. Resistors 248 and 249 impart transistor bias currents. When a control signal 250 output from the CPU 200 becomes "H", the transistor 246 turns on. In the same manner, when a control signal 251 becomes "H", the transistor 247 turns on.

From the above, the relation between Ct and the control signals 250 and 251 becomes as shown below:

| 250 | 251 | ct |
|-----|-----|-----|
| on | on | C0 + C1 + C2 |
| on | off | C0 + C1 |
| off | on | C0 + C2 |
| off | off | C0 |

Although, in this example, the switching of the recording pulse duration T occurred in four stages, it is also possible to control the value of the pulse duration T in multiple stages if the number of control signals and condensers and transistors is increased. The CPU 200 changes the recording power and the recording pulse width according to the signal 202 representing the recording state supplied from the recording state detection means 103 to terminal 201 for maintaining the optimum recording state.

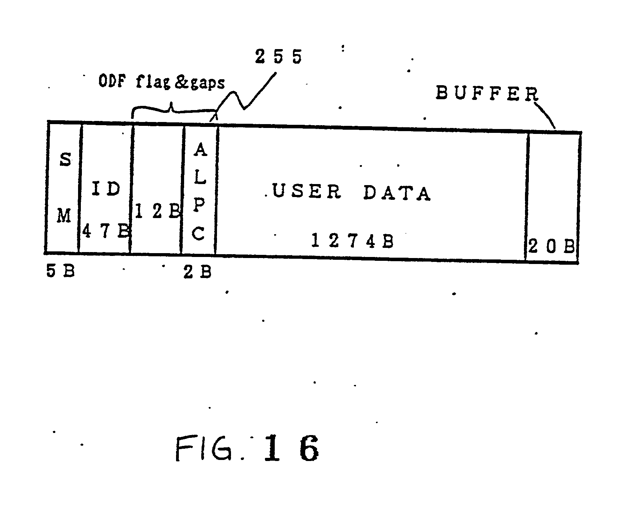

Figure 16 shows the sector format of an optical recording disk. In this case, the format has 1360 bytes per sector. The first five bytes constitute sector marks SM indicating the beginning of the sector. The next forty seven bytes are for ID, being the region where the track address and sector address are written. These five and forty seven bytes are pre-recorded as "pre-pits". The next fourteen bytes constitute the region called ODF flag and gaps. The last two bytes of this region designated 255 constitute the region called ALPC, which is furnished for calibration of the optical output of the semi-conductor laser, and can be used freely without stipulation as to use.

The optical recording apparatus of the present invention may drive the semi-conductor laser to generate recording pulses of a specified pattern in the said ALPC region, detect the recording state from the data read signals of these pits recorded, and control the optical output of the semi-conductor laser so as to produce the optimum recording state.

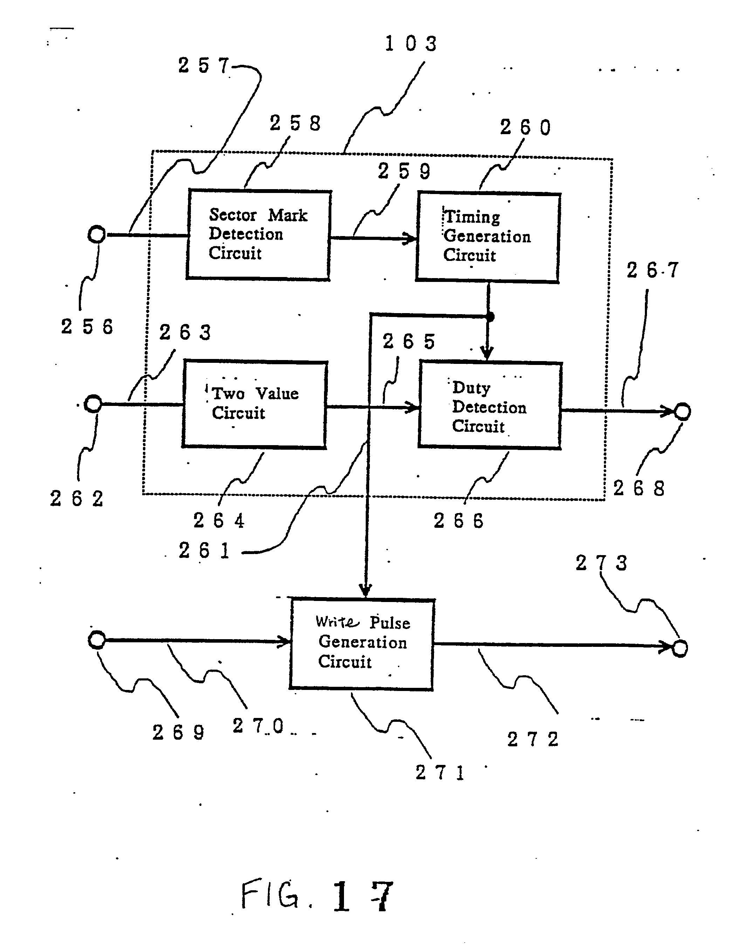

The recording state detection means 103 together with recording pulse formation means in this instance are shown in Figure 17. Firstly, a pre-pit or start signal 257 is received at a terminal 256 and is input to a sector mark detection circuit 258, and a sector mark is detected and a corresponding signal 259 is output. A timing generation circuit 260 generates an ALPC timing signal 261 based on the sector mark signal 259. On the other hand, at a terminal 262, an MO signal 263 is input to a bistable circuit 264, to produce digital data 265. A duty detection circuit 266 measures the duty ratio of the digital data 265 while the ALPC timing signal 261 is active, and outputs a recording state detection signal 267 to a terminal 268.

Generation of the recording pulse for recording a specific pattern in the ALPC area will be explained next. A recording clock signal 270 from a terminal 269 is input to a recording pulse generation circuit 271.

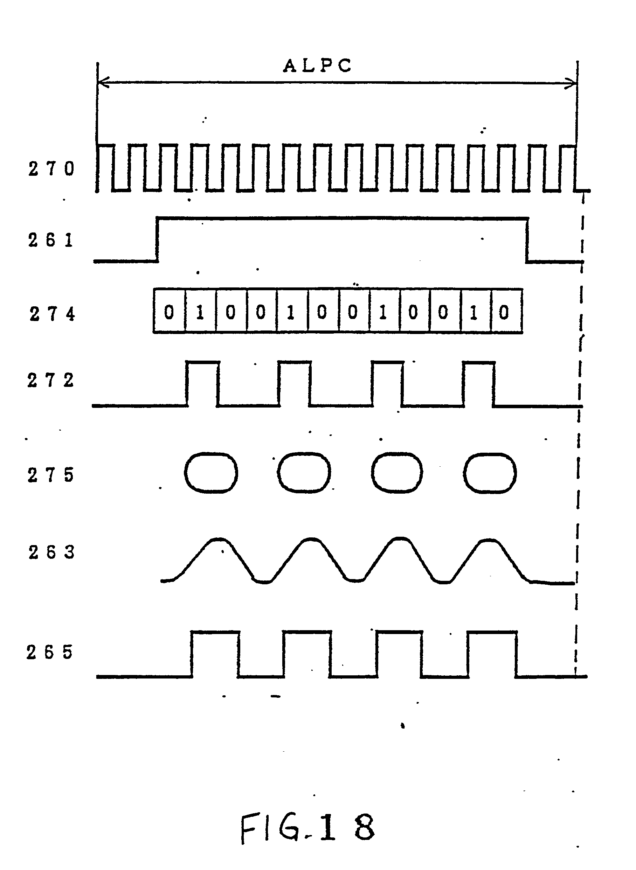

While the ALPC timing signal 261 is active, the recording pulse generation circuit 271 generates a recording pulse 272 for output to a terminal 273. Figure 18 shows the signal wave forms for each part of the circuit of Figure 17. In this example, the ALPC timing signal 261 becomes active in the ALPC two-byte region except for two bits at each of the front and back portions of the region. This is for precision in the timing generation circuit and for absorbing disk rotation unevenness. The pattern of the recording data 274 repeats 010 in a shortest repetitive pattern of 2-7 modulation data, which results in the recording pulse 272 as shown. The duty ratio of the digital data 265, which is a digital representation of the data read signal 263 based on recorded pits 275, is 50% and corresponds with the optimum recording state. In this example, the pits are recorded in fours.

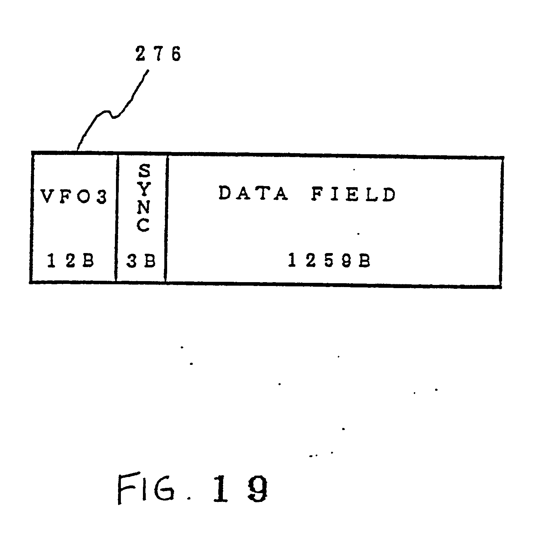

It is also possible, by means of the circuit of Figure 17, to obtain a data read signal at the time of data verification for checking to see if the data has been correctly recorded, for the purpose of supplying recording state signals to the optical output control means 104. Figure 19 shows a format diagram of the user data region of an optical recording disk. The leading twelve bytes designated 276 are an ID region called VFO3. When 2 - 7 modulation is used, the channel bit pattern of VFO3 is the shortest repetitive pattern 010010010010010010 ... 010010. By using the circuit shown in Figure 17 with the duty detection circuit 266 relative to all or part of this pattern, the recording power of the semi-conductor laser is controlled so that the duty ratio is 50%. Recording pattern is shown in Figure 19. Such recording pattern composed of identification field and data field. Further the indentification field has VFO3 including twelve bytes such as the repetition of 010010 ... and SYNC pattern 3B, continuously. Actual data is written in the data field, successively.

Because the length of a bit is unitary, it is possible to measure the duration of a pulse based on a bit not only in the VFO3 region but anywhere in the user zone, employing a pit position detection method. On the other hand, in the case of a pit edge recording method, either a part or all of the pit length can be measured relative to the VFO3 pattern where the duration is pre-determined. Further, by previously deciding to have discrete values in a pattern of two zeros to seven zeros from 1001 to 100000001 in the data, it is possible to classify and recognise these patterns and to measure pit lengths in terms of specified pit lengths. It will not matter if measurements are made for all the pits or for any number of patterns.

The present invention as described above has the effect of allowing recording to be controlled so that the recording power is constantly at an optimum consistent with variation in recording sensitivity as a result of disk temperature changes and ageing.

Further, the apparatus is advantageous from the stand point of disk inter-changeability because optimisation of the recording power is performed automatically by the apparatus for disks of different recording sensitivies.

In the prior art, much consideration has been given to increasing memory capacity, more than to standard formats, and the pit edge recording method is a way of doing this. This method requires precise control over recording power for strict management of the recorded pit length. The optical recording apparatus of the present invention can give particularly goods results with this method.

## Claims

1. Optical recording apparatus having an optical head (101) with a laser as a light source, optical output control means (104) for generating signals for controlling the optical output of the light source for information recording, and optical source drive means (105) for driving the light source according to the output of the optical output control means, characterised by data read means (102) for generating data read signals obtained by monitoring recorded pits in a recording medium, and recording state detection means (103), which detect the state of the recorded pits based on the data read signals and which co-operates with the optical output control means so as to control the optical output of the light source at the time of information recording in dependence upon the state of the recorded pits.

2. Optical recording apparatus according to claim 1 characterised in that the recording state detection means comprise means for converting the data read signal into a digital signal, and pulse width measurement means (139) for measuring the pulse width of the digital signal.

3. Optical recording apparatus according to claim 1 characterised in that the recording state detection means comprise means for converting the data read signal into a digital signal, and duty detection means (151 to 163) for monitoring the duty ratio of the digital signal.

4. Optical recording apparatus according to claim 1 characterised in that the recording state detection means comprise amplitude measurement means (174 to 180, 187 to 195) for measuring the amplitude of the data read signal.

5. Optical recording apparatus according to any preceding claim characterised in that the optical output control means are arranged to control the recording power of the light source.

6. Optical recording apparatus according to any preceding claim characterised in that the optical output control means are arranged to control the duration of recording pulses output by the light source.

7. Optical recording apparatus according to any preceding claim characterised in that the data read means are arranged to generate data read signals derived from a specific pattern of pits recorded in a calibration region on the recording medium.

8. Optical recording apparatus according to any preceding claim characterised in that the data read means are arranged to generate data read signals at a time of data verification to check whether information has been correctly recorded.

9. Optical recording re-generation apparatus characterised in that it comprises (a) within optical recording re-generation apparatus that performs record re-generation of information using an optical head with such as a semi-conductor laser as a light source, (b) a signal re-generation means that re-generates recorded pits, (c) a recording state detection means that detects the state where pits from the output of the said signal re-generation means are recorded, (d) an optical output control means generating signals that control the optical output of the light source at time of information recording in correspondence with the recording state of the pits detected by the said recording state detection means, and (e) an optical source drive means that drives the said light source with the output of the said light output control means.

104

Optical Output
Control Means

103

Recording State
Detection Means

105

Optical Source
Drive Means

102

Signal
Read Out
Means

101

Optical Head

FIG. 1

FIG. 2

FIG. 3

FIG. 4

FIG. 5

141  142  140  147

Oscillation Circuit

CK

143  144

ENABLE

145

RESET

146

FIG. 6

FIG. 7

FIG. 8

Power

165

166

167

149

V

162

VO

FIG. 9

FIG. 10

FIG. 1 1

FIG. 1 2

FIG. 13

```
        ┌─────────────────┐
        │    Initiation   │
        └─────────────────┘
                 │
                 ▼
        ┌─────────────────┐
        │ Current  Starting│
        │ Value  Setting   │
        └─────────────────┘
                 │
                 ▼
        ┌─────────────────┐
        │    Recording     │
        │    Operation     │
        └─────────────────┘
                 │
                 ▼
        ┌─────────────────┐
        │    Recording     │
        │  State  Check    │
        └─────────────────┘
                 │
                 ▼
   Y  ◇─────────────────◇
   ◄──│     Power        │
      │     O K ?        │
      ◇─────────────────◇
                 │ N
                 ▼
      ◇─────────────────◇         Y
      │     Power        │─────────────►
      │   Too  Large ?   │
      ◇─────────────────◇
                 │ N
                 ▼
        ┌─────────────────┐      ┌─────────────────┐
        │ Current   Large │      │  Current  Small │
        └─────────────────┘      └─────────────────┘
                 │
                 ▼
   N   ◇─────────────────◇
  ◄────│   Completion ?   │
       ◇─────────────────◇
                 │ Y
                 ▼
        ┌─────────────────┐
        │   Completion    │
        └─────────────────┘
```

FIG. 1 4

22

FIG. 15

EP 0 453 161 A2

255

ODF flag &gaps

BUFFER

| S M | I D 4 7 B | 1 2 B | A L P C | USER DATA 1 2 7 4 B | 2 0 B |
|---|---|---|---|---|---|

5 B                    2 B

FIG. 1 6

257
103
258
260
259

256

| Sector Mark Detection Circuit | Timing Generation Circuit |
|---|---|

267

262
263
265

| Two Value Circuit | Duty Detection Circuit |
|---|---|

268

264
266
261

273

| Write Pulse Generation Circuit |
|---|

269    270

271    272

FIG. 1 7

EP 0 453 161 A2

FIG. 1 8

26

276

| VFO3 | S Y N C | DATA FIELD |
|------|---------|------------|
| 1 2 B | 3 B | 1 2 5 9 B |

FIG. 1 9